# EUROPÄISCHE PATENTSCHRIFT

(11) **EP 3 176 513 B1**
(45) Veröffentlichungstag und Bekanntmachung des Hinweises auf die Patenterteilung: **29.08.2018**
(21) Anmeldenummer: 16200493.1
(22) Anmeldetag: 24.11.2016
(51) Int. Cl.: F24F 7/007, B01D 35/143, B01D 46/44

(54) **VORRICHTUNG ZUM LÜFTEN VON RÄUMEN**
DEVICE FOR VENTILATING ROOMS
DISPOSITIF DE VENTILATION DE PIÈCES

(30) Priorität: 27.11.2015 AT 510152015
(43) Veröffentlichungstag der Anmeldung: 07.06.2017
(73) Patentinhaber: Limot Elektromotorenbaugesellschaft m.b.H. & Co. KG, 4060 Leonding (AT)
(72) Erfinder: Weigl, Andreas, 4020 Linz (AT)
(74) Vertreter: Patentanwaltskanzlei Hübscher

(56) Entgegenhaltungen:
- EP-A1- 0 962 246
- US-A1- 2014 083 292

## Beschreibung

Die Erfindung bezieht sich auf eine Vorrichtung zum Lüften von Räumen, mit einer in einem Gehäuse angeordneten elektromotorgetriebenen Gebläseanordnung mit einer Motorsteuerung und mit einer wechselbaren Filtereinrichtung zum Filtern der Förderluft.

Derartige Vorrichtungen, sogenannte Lüftereinheiten, dienen insbesondere der Entlüftung von Gebäuderäumen (DE 29623226 U1, DE 20015136 U1). Es soll damit meist in Sanitärräumen, Küchen, Abstellräumen und dgl. schadstoff-, feuchte- und geruchsbelastete Luft abgesaugt werden. Die Vorrichtung wird über eine Verbindungsleitung an ein Steigrohr bzw. Abluftrohr angeschlossen, welches als zentrales Abentlüftungsrohr dient und sich in einem Schacht befindet. Dieses Rohr wird beispielsweise zu einer Entlüftungsöffnung im Dachbereich geführt. In vielen Fällen blasen mehrere Lüfteinheiten in ein gemeinsames Entlüftungsrohr, womit es bei ausgeschalteten Einheiten zu Rückströmungen kommen kann. Um dies zu verhindern, werden gasdichte Rückschlagklappen in die Leitungen eingesetzt, um ein Rückströmen von Abluft aus dem Entlüftungsrohr in den Raum über die Lüftereinheit zu unterbinden. Besagte Vorrichtungen sind insbesondere mit Filtern ausgestattet, die üblicherweise in Abhängigkeit von der Belastung und Abluft mit Verunreinigungen gewechselt werden müssen. Normalerweise wird ein notwendiger Filterwechsel optisch zur Kenntnis gebracht. Diese Zustandsmeldungen werden meistens mittels optischer Hilfsmittel, wie Leuchtsignalen, Erscheinen eines Farbpunktes oder Ähnliches, dargestellt. Die Lüfter sind allerdings in der Regel in über zwei Meter Höhe an der Wand oder Decke montiert, sodass ein Nutzer diese Signale gegebenenfalls nur schwer wahrnimmt und nicht an den erforderlichen Filterwechsel in der gewünschten Weise erinnert wird. Dies hat zur Folge, dass bereits verbrauchte Filter nicht gewechselt werden und kein ordnungsgemäßer Luftaustausch wegen des daraus resultierenden Strömungswiderstands mehr gewährleistet werden kann. Aus der EP 0 962 246 A1 ist ein Vorrichtung zum Lüften von Räumen bekannt, bei welcher ein akustischer Signalgeber den Verschmutzungszustand des Filters angibt. Die EP 0 962 264 A1 offenbart damit den Oberbegriff von Anspruch 1. Der Erfindung liegt somit die Aufgabe zugrunde, eine Vorrichtung der eingangs geschilderten Art zu schaffen, mit der ein wenig störendes, aber dennoch gesichert wahrnehmbares Signal für einen erforderlichen Filterwechsel abgegeben werden können soll.

Die Erfindung löst die gestellte Aufgabe durch eine Vorrichtung zum Lüften von Räumen mit den Merkmalen von Anspruch 1. Der Ablauf der Filterstandzeit kann dabei entweder rein anhand der Lüfterlaufzeit vorgegeben werden bzw. anhand der aufgenommenen Leistungsdaten vom Lüfterantrieb, der ja bei steigendem Strömungswiderstand bei Filter einen erhöhten Strombedarf aufweist. Ist ein Filterwechsel erforderlich, so wird der Elektromotor von der Motorsteuerung derart angesteuert, dass die Gebläseeinheit ein gewünschtes definiertes Signal abgibt. Dazu kann die Motorsteuerung dem elektrischen Ansteuersignal des Motors eine Oberwelle bzw. ein beliebiges geeignetes Signal überlagern, welches Schwingungen im Motorantrieb verursacht, die sich über den Antrieb auf den Lüfter und in weiterer Folge auch auf die Förderluft bzw. gegebenenfalls auf das Gehäuse der Vorrichtung überträgt. Vorzugsweise wird dabei ein klar definierter Ton von der Lüftereinheit abgegeben, der als nicht störend, aber dennoch merklich wahrgenommen wird. Die Motorlüftereinheit wird also von der Motorsteuerung in entsprechende Schwingungen versetzt. Gegebenenfalls könnte sich der Ton auch über die Zeit verändern bzw. eine Melodie abgegeben werden.

Besonders vorteilhafte Verhältnisse ergeben sich, wenn der Filtereinrichtung eine Filterkennung und dem Gehäuse eine Filtererkennung zugeordnet sind. Somit ist es möglich, unterschiedliche Filter einzusetzen, denen unterschiedliche Standzeiten zugeordnet sind. Ist die mit der Filterkennung verknüpfte bzw. gegebenenfalls in der Filterkennung intregierte Standzeit erreicht, wird die Motorsteuerung den Elektromotor in der erfindungsgemäßen Weise ansteuern. Ebenso ist dabei gewährleistet, dass, wenn jeder Filter eine eindeutige Filterkennung hat, sichergestellt, dass ein benutzter Filter nicht noch einmal eingesetzt werden kann. Grundsätzlich müssen Ventilatoren in Einrolllüftungssystemen zum Schutz mit Filtern ausgerüstet sein. Um einen Betrieb ohne Filter zu verhindern, ist eine berührungslose Filtererkennung intrigiert. Der eingelegte Filter wird erkannt und nach einer vorgegebenen Zeitspanne das akustische Signal ausgegeben. Damit wird dem Nutzer signalisiert, den Filter zu wechseln. Jedem Filter ist eine eigene Erkennung zugewiesen. Sollte der gleiche Filter erneut eingesetzt werden, so kommt nach kurzer Zeit erneut das Signal zum Filterwechseln.

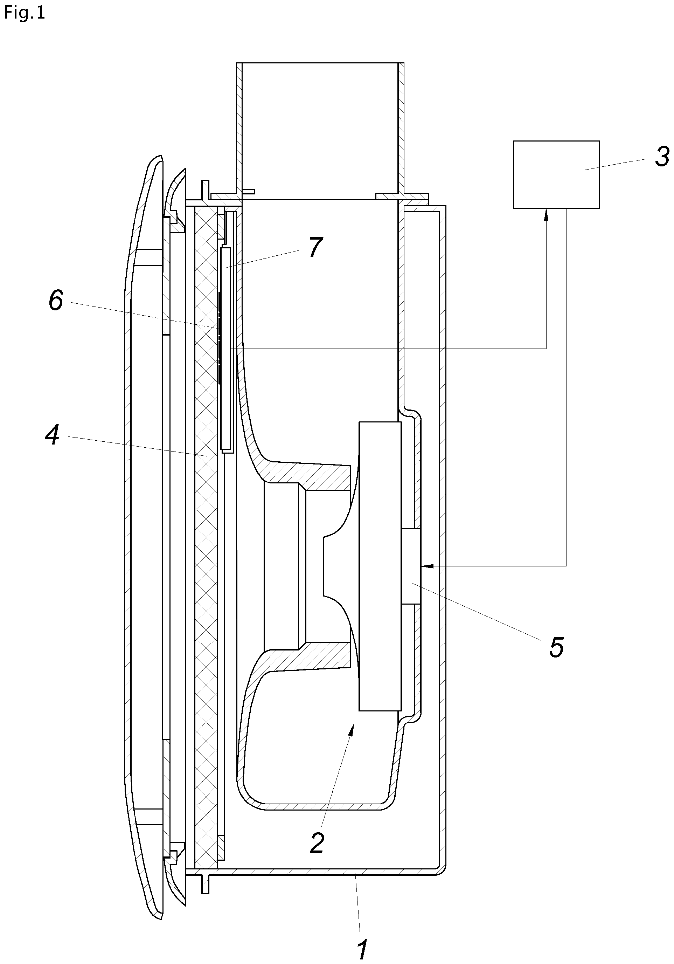

In der Zeichnung ist die Erfindung anhand eines Ausführungsbeispiels einer erfindungsgemäßen Vorrichtung im Querschnitt schematisch dargestellt.

Die erfindungsgemäße Vorrichtung zum Lüften von Räumen umfasst eine in einem Gehäuse 1 angeordnete elektromotorgetriebene Gebläseanordnung 2 mit einer Motorsteuerung 3 und mit einer wechselbaren Filtereinrichtung 4 zum Filtern der Förderluft. Die Motorsteuerung 3 ist dabei derart ausgestaltet, dass sie nach Ablauf einer vorgegebenen Filterstandzeit den Elektromotor 5 derart schwingungserregt, dass die Gebläseanordnung 2 ein definiertes akustisches Signal abgibt. Dies wird dadurch erreicht, dass die Motorsteuerung 3 den Elektromotor mit der Gebläseanordnung in Drehschwingung versetzt.

Zudem gehört der Filtereinrichtung 4 eine Filterkennung 6 zu, die direkt auf die Filtereinrichtung 4 aufgesetzt bzw. in diese intrigiert ist. Zu dem Gehäuse 1 ist wiederum eine Filtererkennung 7 zugeordnet, mit der die Filterkennung 6 der Filtereinrichtung 4 berührungslos ausgelesen und die Auslesedaten an die Steuereinrichtung 4 übermittelt werden können.

## Patentansprüche

1. Vorrichtung zum Lüften von Räumen, mit einer in einem Gehäuse (1) angeordneten elektromotorgetriebenen Gebläseanordnung (2) mit einer Motorsteuerung (3) und mit einer wechselbaren Filtereinrichtung (4) zum Filtern der Förderluft, **dadurch gekennzeichnet, dass** die Motorsteuerung (3) den Elektromotor (5) nach Ablauf einer Filterstandzeit derart schwingungserregt, dass die Gebläseanordnung (2) ein definiertes akustisches Signal abgibt.

2. Vorrichtung nach Anspruch 1, **dadurch gekennzeichnet, dass** der Filtereinrichtung (4) eine Filterkennung (6) und dem Gehäuse (1) eine Filtererkennung (7) zugeordnet sind.

## Claims

1. Apparatus for ventilating rooms, comprising an electric motor-driven fan assembly (2) which is arranged in a housing (1) and has a motor controller (3) and a replaceable filter device (4) for filtering the conveying air, **characterised in that** the motor controller (3) excites the electric motor (5) to oscillate upon expiration of the service life of a filter such that the fan assembly (2) outputs a defined acoustic signal.

2. Apparatus as claimed in claim 1, **characterised in that** the filter device (4) is allocated a filter identification means (6) and the housing (1) is allocated a filter recognition means (7).

## Revendications

1. Dispositif de ventilation de pièces, avec un système de ventilateur (2) entraîné par moteur électrique agencé dans un carter (1) avec une commande moteur (3) et avec un dispositif de filtration (4) pouvant être remplacé pour filtrer l'air d'alimentation, **caractérisé en ce que** la commande moteur (3) excite l'électromoteur (5) en oscillation après écoulement d'un temps de filtration de telle sorte que le système de ventilateur (2) émet un signal acoustique défini.

2. Dispositif selon la revendication 1, **caractérisé en ce qu'**une détection de filtration (6) est associée au dispositif de filtration (4), et une détection de filtration (7), au carter (1).
